(19)

**Europäisches Patentamt**

**European Patent Office**

**Office européen des brevets**

(11)  **EP 4 276 473 B1**

(12)  **EUROPÄISCHE PATENTSCHRIFT**

(45) Veröffentlichungstag und Bekanntmachung des Hinweises auf die Patenterteilung:
**03.12.2025  Patentblatt 2025/49**

(21) Anmeldenummer: **23164054.1**

(22) Anmeldetag: **24.03.2023**

(51) Internationale Patentklassifikation (IPC):
*G01P 3/36* *(2006.01)*

(52) Gemeinsame Patentklassifikation (CPC):
**G01P 3/36**

(54) **SENSOREINRICHTUNG UND VERFAHREN ZUR ERFASSUNG EINER RELATIVBEWEGUNG SOWIE COMPUTERPROGRAMMPRODUKT**

SENSOR DEVICE AND METHOD FOR DETECTING A RELATIVE MOVEMENT AND COMPUTER PROGRAM PRODUCT

DISPOSITIF DE CAPTEUR ET PROCÉDÉ DE DÉTECTION D'UN MOUVEMENT RELATIF ET PRODUIT PROGRAMME INFORMATIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **09.05.2022  EP 22172354**

(43) Veröffentlichungstag der Anmeldung:
**15.11.2023  Patentblatt 2023/46**

(73) Patentinhaber: **Kistler Holding AG
8408 Winterthur (CH)**

(72) Erfinder:
- **Winterstein, Gabriel
  71083 Herrenberg (DE)**
- **Regitz, Simon
  75223 Niefern-Öschelbronn (DE)**
- **Vischer, Moritz
  70563 Stuttgart (DE)**
- **Braner, Sebastian
  88271 Wilhelmsdorf (DE)**

(56) Entgegenhaltungen:
FR-A1- 2 749 086     US-A1- 2009 303 459
US-B1- 6 403 950

## Beschreibung

### Technisches Gebiet

Die Erfindung betrifft eine Sensoreinrichtung und ein Verfahren zur Erfassung einer Relativbewegung zwischen einem Fahrzeug und einer Fahrbahn, welche Erfindung sich durch eine hohe Genauigkeit auch bei relativ schlechten Fahrbahnbedingungen und eine geringe Empfindlichkeit auf Störfrequenzen auszeichnet. Ferner betrifft die Erfindung ein Computerprogrammprodukt als Bestandteil einer derartigen Sensoreinrichtung oder zum Ausführen wenigstens eines Programmschritts eines erfindungsgemässen Verfahrens.

### Stand der Technik

Aus der EP0101536A1 ist eine Sensoreinrichtung zur Erfassung einer Relativbewegung zwischen einem Fahrzeug und einer Fahrbahn mit den Merkmalen des Oberbegriffs des Anspruchs 1 bekannt. Die bekannte Sensoreinrichtung dient insbesondere zur Erfassung einer Geschwindigkeit und einer Richtung der Relativbewegung des Fahrzeugs relativ zur Fahrbahn. So lassen sich aus Horizontalkomponenten der Geschwindigkeit des Fahrzeugs auch ein Schwimmwinkel des Fahrzeugs relativ zur Fahrbahn erfassen. Hierzu weist die bekannte Sensoreinrichtung ein optisches System auf, welches am Fahrzeug angebracht ist. Das optische System weist wenigstens zwei Fotoempfänger auf. Die beiden Fotoempfänger sind gitterförmig ausgebildet und in einem Fotoempfängerwinkel zueinander angeordnet. Jeder der beiden Fotoempfänger weist eine Mehrzahl von Fotodioden auf. Auf jede der Mehrzahl von Fotodioden wird ein Teil der Fahrbahn abgebildet und so von der Mehrzahl von Fotodioden erfasst. Für den erfassten Teil der Fahrbahn erzeugt die Mehrzahl von Fotodioden Messsignale. Weiterhin weist die bekannte Sensoreinrichtung eine Schaltung als Teil einer Auswerteeinrichtung auf, um die Messsignale auszuwerten und anhand der ausgewerteten Messsignale die Geschwindigkeit bzw. die Richtung der Relativbewegung der Sensoreinrichtung in Bezug zur Fahrbahn zu erfassen.

Weiterhin vertreibt die Anmelderin der vorliegenden Anmeldung unter der Bezeichnung "Correvit" eine Sensoreinrichtung, die ebenfalls nach dem Oberbegriff des Anspruchs 1 ausgebildet sind. Die Sensoreinrichtung namens "Correvit" wird am Fahrzeug angebracht und zeichnet sich dadurch aus, dass Frequenzen der Messsignale von wenigstens zwei Fotoempfängern zur Berechnung der Geschwindigkeit des Fahrzeugs verwendet werden, während für die Erfassung der Richtung der Relativbewegung des Fahrzeugs lediglich Messsignale von einem der Fotoempfänger verwendet werden.

Obwohl dieses Verfahren zur Erfassung der Relativbewegung mit einer Messgenauigkeit der Geschwindigkeit von kleiner/gleich +/-0.2% FSO (Full Scale Output) sehr empfindlich ist, kann die Erfassung der Relativbewegung durch Störfrequenzen, die von der Struktur (Asphalt, Beton, Wasser, Eis, usw.) der Fahrbahnoberfläche herrühren, verfälscht werden. Die Störfrequenzen verrauschen die erfasste Geschwindigkeit und den erfassten Schwimmwinkel.

Die Schrift FR2749086A1 offenbart eine Sensoreinrichtung mit mindestens zwei Fotoempfängern zur Erfassung der Relativbewegung zwischen einem Fahrzeug und einer Fahrbahn. Die beiden Fotoempfänger sind parallel zur Fahrtrichtung des Fahrzeugs angeordnet. Jeder der beiden Fotoempfänger weist einen Messkanal auf und erzeugt für einen erfassten Teil der Fahrbahn Fotoempfängersignale. Die Fahrzeuggeschwindigkeit wird aus einer zeitlichen Verschiebung der Fotoempfängersignale der beiden Fotoempfänger bestimmt.

Die Schrift US6403950B1 zeigt eine Sensoreinrichtung zur Erfassung der Geschwindigkeit einer strukturierten Oberfläche, bei der mehrere Fotoempfänger phasenversetzte Messsignalen erfassen. Jeder der Fotoempfänger misst eine zeitliche Reihenfolge von Messsignalen. Die Messsignale werden daraufhin zu sinusförmigen Signalen gefiltert.

Die Schrift US2009303459A1 offenbart eine Sensoreinrichtung zur Erfassung der Geschwindigkeit eines Gegenstands unter Verwendung von zwei Fotoempfängern. Die beiden Fotoempfänger sind senkrecht zur Geradeausrichtung des Gegenstands in einem räumlichen Abstand zueinander angeordnet. Jeder Fotoempfänger erfasst Messsignale. Der erste Fotoempfänger erfasst erste Messsignale, der zweite Fotoempfänger erfasst zweite Messignale. Aus dem räumlichen Abstand der beiden Fotoempfänger zueinander und einem Verstärkungsfaktor der beiden Fotoempfänger wird die Geschwindigkeit des Gegenstands berechnet.

### Aufgabe der Erfindung

Es ist Aufgabe der vorliegenden Erfindung, eine Sensoreinrichtung zur Erfassung einer Relativbewegung zwischen einem Fahrzeug und einer Fahrbahn bereitzustellen, welche den Vorteil aufweist, dass sie insbesondere bei geringen Geschwindigkeiten eine verbesserte Genauigkeit und ein geringeres Geschwindigkeits- und Winkelrauschen aufweist. Ferner soll die Erfindung eine verbesserte Erfassung der Geschwindigkeit auch bei kritischen Fahrbahnoberflächen ermöglichen, und sie soll die Empfindlichkeit auf Störfrequenzen verringern.

### Offenbarung der Erfindung

Diese Aufgabe löst die Erfindung mit einer Sensoreinrichtung zur Erfassung einer Relativbewegung zwischen einem Fahrzeug und einer Fahrbahn; mit einem optischen System, welches am Fahrzeug angebracht ist, welches optische System wenigstens zwei, in einem Fotoempfängerwinkel zueinander angeordnete Fotoempfänger aufweist, auf die ein Teil der Fahrbahn abbildbar ist und mit denen der abgebildete Teil der Fahrbahn erfassbar ist, welche Fotoempfänger für den erfassten Teil der Fahrbahn Messsignale erzeugen; und mit einer wenigstens einen Algorithmus aufweisenden Auswerteeinrichtung zur Bestimmung zumindest einer Fahrzeuggeschwindigkeit; wobei der Algorithmus dazu ausgebildet ist, aus den Messsignalen von jedem der beiden Fotoempfänger wenigstens zwei zeitliche Reihenfolgen zu bilden und die Fahrzeuggeschwindigkeit anhand einer zeitlichen Verschiebung der beiden zeitlichen Reihenfolgen zueinander zu bestimmen.

Der Erfindung liegt die Idee zugrunde, dass von jedem der beiden Fotoempfänger des optischen Systems von dem Algorithmus der Sensoreinrichtung auswertbare Messsignale erzeugt werden. Der Algorithmus bildet aus den Messsignalen von jedem der beiden Fotoempfänger zwei zeitliche Reihenfolgen, die hinsichtlich ihrer Phase zueinander versetzt sind, und die dadurch auch zeitlich zueinander verschoben sind. Der Algorithmus bestimmt nun diese zeitliche Verschiebung, um damit auf Grundlage physikalischer Überlegungen die Fahrzeuggeschwindigkeit zu erfassen.

Vorteilhafte Weiterbildungen der erfindungsgemässen Sensoreinrichtung zur Erfassung einer Relativbewegung zwischen einem Fahrzeug und einer Fahrbahn sind in den Unteransprüchen aufgeführt.

## Kurze Beschreibung der Zeichnungen

Weitere Vorteile, Merkmale und Einzelheiten der Erfindung ergeben sich aus der nachfolgenden Beschreibung beispielhafter Ausführungsformen der Erfindung sowie anhand der Zeichnungen.

Fig. 1     zeigt eine mögliche Anordnung einer Sensoreinrichtung an einem Fahrzeug in einer Seitenansicht,

Fig. 2     einen Ausschnitt eines zwei Fotoempfänger aufweisenden optischen Systems der Sensoreinrichtung gemäss Fig. 1,

Fig. 3     eine vereinfachte Darstellung des optischen Systems und der Auswerteeinrichtung der Sensoreinrichtung gemäss Fig. 1 und 2,

Fig. 4     zwei in einem ersten Zeitfenster dargestellte zeitliche Reihenfolgen von Messsignalen eines Fotoempfängers der Sensoreinrichtung gemäss Fig. 1 bis 3, und

Fig. 5     zwei in einem zweiten Zeitfenster dargestellte zeitliche Reihenfolgen von Messsignalen eines Fotoempfängers der Sensoreinrichtung gemäss Fig. 1 bis 3.

Gleiche Elemente bzw. Elemente mit gleicher Funktion sind in den Figuren mit den gleichen Bezugsziffern versehen.

## Ausführungsformen der Erfindung

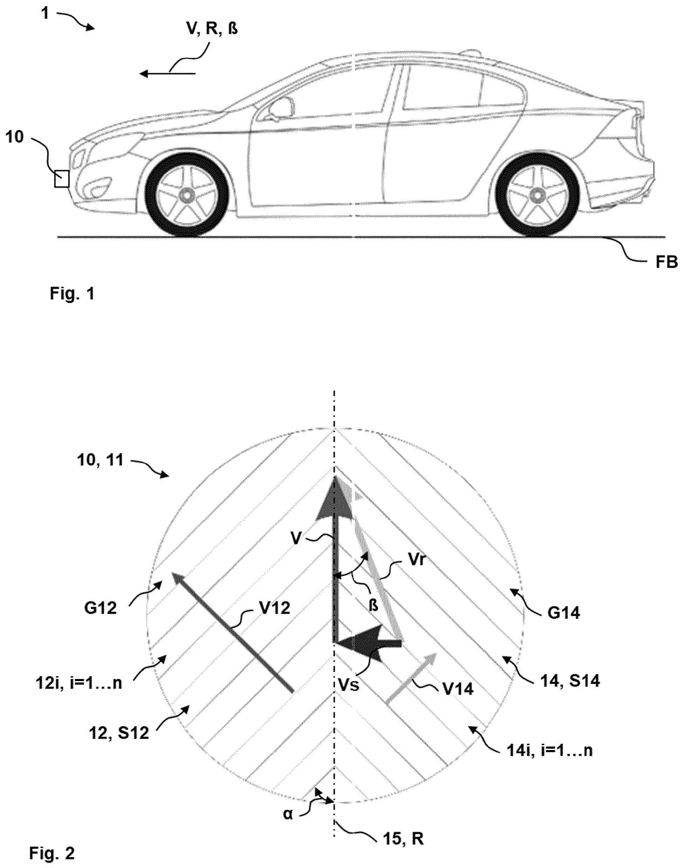

In der Fig. 1 ist ein Fahrzeug 1 dargestellt, das mittels einer beispielsweise an der Fahrzeugfront des Fahrzeugs 1 angeordneten Sensoreinrichtung 10 ausgestattet ist. Die Sensoreinrichtung 10 dient der Erfassung einer Fahrzeuggeschwindigkeit V des Fahrzeugs 1, der Erfassung eines Schwimmwinkels $\beta$ des Fahrzeugs 1, sowie der Erfassung der Fahrtrichtung R (Vorwärtsfahrt bzw. Rückwärtsfahrt). Hierzu verwendet die Sensoreinrichtung 10 ein Verfahren zur Erfassung einer Relativbewegung zwischen dem Fahrzeug 1 und der Fahrbahn FB.

Die Sensoreinrichtung 10 umfasst, wie aus dem Stand der Technik an sich bekannt, ein optisches System 11 mit wenigstens zwei Fotoempfängern 12, 14. Diese beiden Fotoempfänger 12, 14 umfassen einen ersten Fotoempfänger 12 und einen zweiten Fotoempfänger 14. Jeder der beiden Fotoempfänger 12, 14 ist gitterförmig ausgebildet, der erste Fotoempfänger 12 weist eine erste Gitterkonstante G12 auf, der zweite Fotoempfänger weist eine zweite Gitterkonstante G14 auf. Zwischen den beiden Fotoempfängern 12, 14 verläuft eine Symmetriegerade 15. Entsprechend der Darstellung der Fig. 2 sind die beiden Fotoempfänger 12, 14 in einem Fotoempfängerwinkel $\alpha$ von 45° zur Symmetriegeraden 15 angeordnet. Die Symmetriegerade 15 ist zur Fahrtrichtung R des Fahrzeugs 1 und somit zur Fahrzeuglängsachse ausgerichtet. Die Symmetriegerade 15 erstreckt sich optisch parallel zur Fahrzeuglängsachse. Bei Kenntnis der vorliegenden Erfindung kann der Fotoempfängerwinkel $\alpha$ eine beliebige andere Grösse haben, so kann seine Grösse 30° oder 60° betragen.

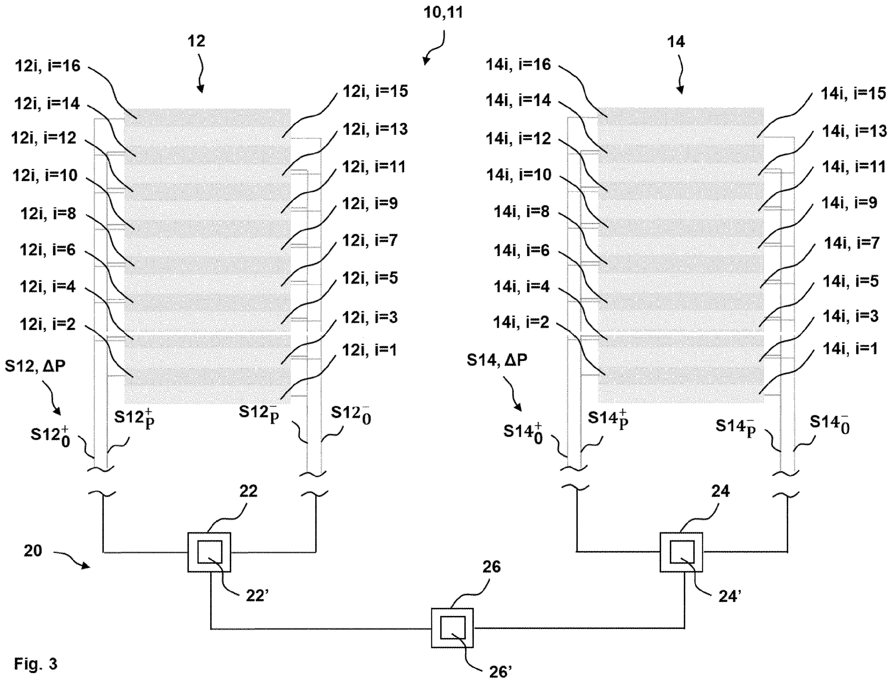

Jeder Fotoempfänger 12, 14 weist eine Mehrzahl n von Fotodioden 12i, 14i auf, wobei der Index i eine ganze Zahl zwischen 1 und n ist. Gemäss Fig. 2 und 3 weist jeder Fotoempfänger 12, 14 n=16 Fotodioden 12i, 14i auf. Bei Kenntnis der vorliegenden Erfindung kann die Mehrzahl der Fotodioden deutlich grösser sein. Auf jede der Mehrzahl n der Fotodioden 12i, 14i ist ein erfasster Teil der Fahrbahn FB abbildbar. Für die abgebildete Fahrbahn FB erzeugt jeder der beiden Fotoempfänger 12, 14 Messsignale S12, S14. Der erste Fotoempfänger 12 weist erste Fotodioden 12i, i=1...n auf und erzeugt erste Messsignale S12. Der zweite Fotoempfänger 14 weist zweite Fotodioden 14i, i=1...n auf und erzeugt zweite Messsignale S14. Die Messsignale S12, S14 sind elektrische Spannungen. Die Messsignale S12, S14 weisen eine Frequenz auf.

Mit Blick auf die Fig. 2 wird die Erfassung der Relativbewegung zwischen dem Fahrzeug 1 und der Fahrbahn FB einzelnen durch das optische System 11 mit den Fotoempfängern 12, 14 wie folgt erläutert:

-     V12 und V14 bezeichnen zwei Geschwindigkeitskomponenten, welche aus den von den beiden Fotoempfängern 12, 14 erzeugten Messsignalen S12, S14 stammen. Diese beiden Geschwindigkeitskomponenten V12, V14 umfassen eine erste Geschwindigkeitskomponente V12, welche aus ersten Messsignalen S12 stammt und eine zweite Geschwindigkeitskomponente V14, welche aus zweiten Messsignalen S14 stammt. Jede der beiden Geschwindigkeitskomponenten V12, V14 ist proportional zur Frequenz der Messsignale S12, S14, aus der die Geschwindigkeitskomponente V12, V14 stammt.

- Vr bezeichnet die durch Vektoraddition berechnete resultierende Geschwindigkeit aus den beiden Geschwindigkeitskomponenten V12 und V14. Der Betrag der resultierenden Geschwindigkeit Vr lautet:

$$|\mathrm{Vr}| = \sqrt{V12^2 + V14^2}$$

- Vp bezeichnet die Projektion der resultierenden Geschwindigkeit Vr auf die Symmetriegerade 15. Vp ist die parallel zur Fahrzeuglängsachse verlaufende Geschwindigkeitskomponente. Die parallele Geschwindigkeitskomponente Vp wird nachfolgend auch Fahrzeuggeschwindigkeit V genannt. Der Betrag der Fahrzeuggeschwindigkeit V lautet:

$$|\mathrm{V}| = |\mathrm{Vr}| * \cos\text{ß}$$

- Dementsprechend bezeichnet Vs die Projektion der resultierenden Geschwindigkeitskomponente Vr in eine Richtung senkrecht zur Symmetriegeraden 15. Vs ist die senkrecht zur Fahrzeuglängsachse verlaufende Geschwindigkeitskomponente. Der Betrag der senkrechten Geschwindigkeitskomponente Vs lautet:

$$|\mathrm{Vs}| = |\mathrm{Vr}| * \sin\text{ß}$$

- β bezeichnet den Schwimmwinkel, welcher vom Fotoempfängerwinkel α und dem Tangens der ersten und zweiten Geschwindigkeitskomponente V12, V14 abhängt:

$$\text{ß} = \alpha - \tan^{-1}\left(\frac{V12}{V14}\right)$$

Der Schwimmwinkel β lässt sich aus der Darstellung der Fig. 2 bestimmen.

Fig. 3 zeigt weitere Details der beiden Fotoempfänger 12, 14. Jeder der beiden Fotoempfänger 12, 14 weist vier Signalausgänge auf. An jedem der vier Signalausgänge sind Messsignale S12, S14 abgreifbar.

Die ersten Messsignale S12 umfassen erste positive Messsignale $S12^+_0$, $S12^+_P$ und erste negative Messsignale $S12^-_0$, $S12^-_P$.

- An zwei ersten Signalausgängen des ersten Fotoempfängers 12 sind erste positive Messsignale $S12^+_0$, $S12^+_P$ abgreifbar. Die ersten positiven Messsignale $S12^+_0$, $S12^+_P$ sind durch ein Zeichen + als Signale mit einer positiven Signalstärke S gekennzeichnet. Die ersten positiven Messsignale $S12^+$ weisen eine Nullphase 0 gleich 0° auf und stammen von ersten Fotodioden 12i mit geradzahligem Index i=4...16. Die ersten positiven Messsignale $S12^+_P$ weisen eine weitere Phase P gleich 90° auf und stammen von ersten Fotodioden 12i mit geradzahligem Index i=2...14. Dadurch, dass die ersten Fotodioden 12i unterschiedliche geradzahlige Indizes i haben, sind die ersten positiven Messsignale $S12^+_0$, $S12^+_P$ um einen Phasenversatz ∆P zueinander phasenversetzt. Der Phasenversatz ∆P ist die Differenz zwischen der Nullphase 0 und der weiteren Phase P. Gemäss Fig. 2 und 3 beträgt der Phasenversatz ∆P = 90°.

- An zwei zweiten Signalausgängen des ersten Fotoempfängers 12 sind ersten negative Messsignale $S12^-_0$, $S12^-_P$ abgreifbar. Die ersten negativen Messsignale $S12^-_0$, $S12^-_P$ sind durch ein Zeichen - als Signale mit einer negativen Signalstärke S gekennzeichnet. Die ersten negativen Messsignale $S12^-_0$ weisen die Nullphase 0 gleich 0° auf und stammen von ersten Fotodioden 12i mit ungeradzahligem Index i=3...15. Die ersten negativen Messsignale $S12^-_P$ weisen die weitere Phase P gleich 90° auf und stammen von ersten Fotodioden 12i mit ungeradzahligem Index i=1...13. Dadurch, dass die ersten Fotodioden 12i unterschiedliche ungeradzahlige Indizes i haben, sind die ersten negativen Messsignale $S12^-_0$, $S12^-_P$ um den Phasenversatz ∆P zueinander phasenversetzt.

Die zweiten Messsignale S14 umfassen zweite positive Messsignale $S14^+_0$, $S14^+_P$ und zweite negative Messsignale $S14^-_0$, $S14^-_P$.

- An zwei ersten Signalausgängen des zweiten Fotoempfängers 14 sind zweite positive Messsignale $S14^+_0$, $S14^+_P$, abgreifbar. Die zweiten positiven Messsignale $S14^+_0$, $S14^+_P$ sind durch ein Zeichen + als Signale mit einer positiven Signalstärke S gekennzeichnet. Die zweiten positiven Messsignale $S14^+_0$ weisen die Nullphase 0 gleich 0° auf und stammen von zweiten Fotodioden 14i mit geradzahligem Index i=4...16. Die zweiten positiven Messsignale $S14^+_P$ weisen die weitere Phase P gleich 90° auf und stammen von zweiten Fotodioden 14i mit geradzahligem Index i=2... 14. Dadurch, dass die zweiten Fotodioden 14i unterschiedliche geradzahlige Indizes i haben, sind die zweiten positiven Messsignale $S14^+_0$, $S14^+_P$ um den Phasenversatz ∆P zueinander phasenversetzt.

- Und an zwei zweiten Signalausgängen des zweiten Fotoempfängers 14 sind zweite negative Messsignale $S14^-_0$, $S14^-_P$ abgreifbar. Die zweiten negativen Messsignale $S14^-_0$, $S14^-_P$, sind durch ein Zeichen - als Signale mit einer negativen Signalstärke S gekennzeichnet. Die zweiten negativen Messsignale $S14^-_0$ weisen die Nullphase 0 gleich 0° auf und stammen von zweiten Fotodioden 14i mit ungeradzahligem Index i=3...15. Die zweiten negativen Messsignale $S14^-_P$ weisen die weitere Phase P gleich 90° auf und stammen von zweiten Fotodioden 14i mit ungeradzahligem Index i=1...13. Dadurch, dass die zweiten Fotodioden 14i unterschiedliche ungeradzahlige Indizes i haben, sind die zweiten negativen Messsignale $S14^-_0$, $S14^-_P$ um den Phasenversatz $\Delta$P zueinander phasenversetzt.

Bei Kenntnis der vorliegenden Erfindung können die phasenverschobenen ersten und zweiten Messsignale eine anderen Phasenversatz als 90° zueinander phasenversetzt sein, so können sie um einen Phasenversatz von 180° oder 270° zueinander phasenversetzt sein.

Die beiden Fotoempfänger 12, 14 sind mit einer Auswerteeinrichtung 20 gekoppelt. Die Auswerteeinrichtung 20 weist mehrere Auswerteeinheiten 22, 24, 256 auf. Gemäss Fig. 3 weist die Auswerteeinrichtung 20 eine erste Auswerteeinheit 22, eine zweite Auswerteeinheit 24 und eine dritte Auswerteeinheit 26. Jede Auswerteeinheit 22, 24, 26 umfasst wiederum mindestens einen Algorithmus 22', 24', 26'.

Die erste Auswerteeinheit 22 weist einen ersten Algorithmus 22' auf, der dazu ausgebildet ist, die erste Geschwindigkeitskomponente V12 aus den ersten positiven und negativen Messsignalen $S12^+_0$, $S12^+_P$, $S12^-_0$, $S12^-_P$ des ersten Fotoempfängers 12 zu berechnen. Der erste Algorithmus 22' ist auch dazu ausgebildet, die Fahrtrichtung R aus den ersten positiven und negativen Messsignalen $S12^+_0$, $S12^+_P$, $S12^-_0$, $S12^-_P$ des ersten Fotoempfängers 12 zu berechnen.

Die zweite Auswerteeinheit 24 weist einen zweiten Algorithmus 24' auf, der dazu ausgebildet ist, die zweite Geschwindigkeitskomponente V14 aus den zweiten positiven und negativen Messsignalen $S14^+_0$, $S14^+_P$, $S14^-_0$, $S14^-_P$ des zweiten Fotoempfängers 14 zu berechnen. Und der zweite Algorithmus 24'ist auch dazu ausgebildet, die Fahrtrichtung R aus den zweiten positiven und negativen Messsignalen $S14^+_0$, $S14^+_P$, $S14^-_0$, $S14^-_P$ des zweiten Fotoempfängers 14 zu berechnen.

Die dritte Auswerteeinheit 26 weist einen dritten Algorithmus 26' auf, der dazu ausgebildet ist, die Fahrzeuggeschwindigkeit V aus der ersten und zweiten Geschwindigkeitskomponente V12, V14 zu berechnen. Der dritte Algorithmus 26' ist auch dazu ausgebildet, den Schwimmwinkel $\beta$ aus der Fahrzeuggeschwindigkeit V und der resultierenden Geschwindigkeitskomponente Vr berechnen.

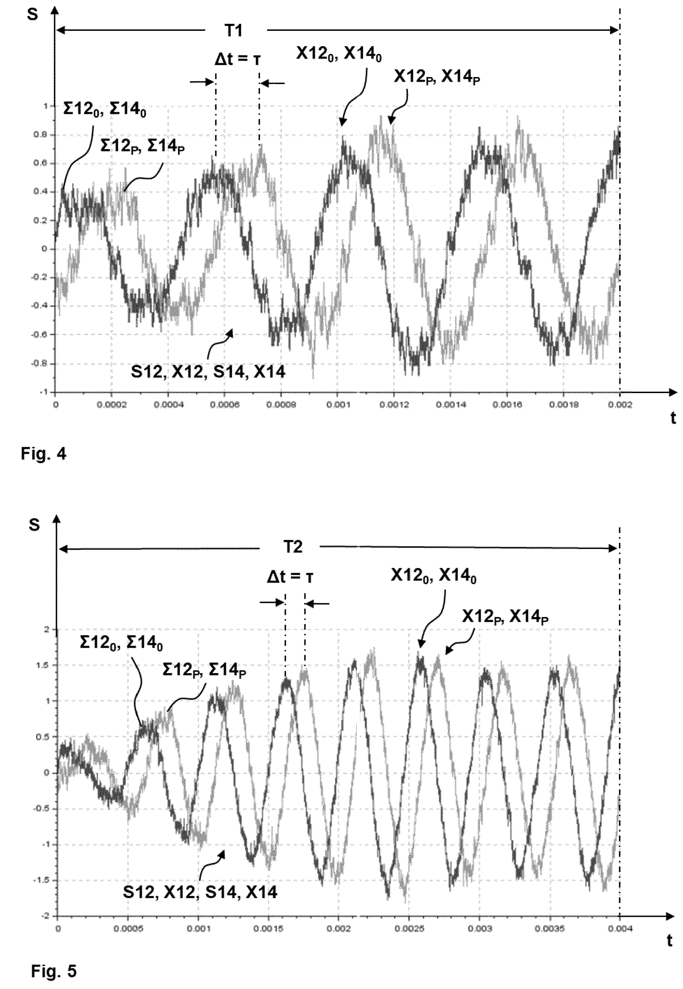

Die Funktionsweise des ersten und zweiten Algorithmus 22', 24' wird anhand der Fig. 4 und 5 erklärt.

In den Fig. 4 und 5 sind erste Messsignale S12 des ersten Fotoempfängers 12 oder zweite Messsignale S14 des zweiten Fotoempfängers 14 als zeitliche Reihenfolgen $\Sigma12_0$, $\Sigma12_P$ oder $\Sigma14_0$, $\Sigma14_P$ dargestellt.

Die Messsignale S12, S14 weisen Potentialdifferenzen X12, X14 auf. Zwischen ersten Messsignalen $S12^+_0$, $S12^-_0$ der Nullphase 0 bestehen erste Potentialdifferenzen $X12_0$ der Nullphase 0. Zwischen ersten Messsignalen $S12^+_P$, $S12^-_P$ der weiteren Phase P bestehen erste Potentialdifferenzen $X12_P$ der weiteren Phase P. Zwischen zweiten Messsignalen $S14^+_0$, $S14^-_0$ der Nullphase 0 bestehen zweite Potentialdifferenzen $X14_0$ der Nullphase 0. Zwischen zweiten Messsignalen $S14^+_P$, $S14^-_P$ der weiteren Phase P bestehen zweite Potentialdifferenzen $X14_P$ der weiteren Phase P. Die vertikale Achse gibt die Signalstärke S der Potentialdifferenzen $X12_0$, $X12_P$, $X14_0$, $X14_P$ an. Die horizontale Achse gibt die Zeit t an, zu welcher der Fotoempfänger 12, 14 die Messsignale S12, S14 erzeugt hat.

- Der erste Algorithmus 22' ist dazu ausgebildet, für die Nullphase 0 eine erste zeitliche Reihenfolge $\Sigma12_0$ mit ersten Potentialdifferenzen $X12_0$ zwischen ersten Messsignalen $S12^+_0$, $S12^-_0$ zu bilden. Der erste Algorithmus 22' ist dazu ausgebildet, für die weitere Phase P eine erste zeitliche Reihenfolge $\Sigma12_P$ mit ersten Potentialdifferenzen $X12_P$ zwischen ersten Messsignalen $S12^+_P$, $S12^-_P$ zu bilden.

- Der zweite Algorithmus 24' ist dazu ausgebildet, für die Nullphase 0 eine zweite zeitliche Reihenfolge $\Sigma14_0$ mit zweiten Potentialdifferenzen $X14_0$ zwischen zweiten Messsignalen $S14^+_0$, $S14^-_0$ zu bilden. Der zweite Algorithmus 24' ist dazu ausgebildet, für die weitere Phase P eine zweite zeitliche Reihenfolge $\Sigma14_P$ mit zweiten Potentialdifferenzen $X14_P$ zwischen zweiten Messsignalen $S14^+_P$, $S14^-_P$ zu bilden.

Die beiden ersten zeitlichen Reihenfolgen $\Sigma12_0$, $\Sigma12_P$ und die beiden zweiten zeitlichen Reihenfolgen $\Sigma14_0$, $\Sigma14_P$ weisen mehrere Perioden auf. Zwischen elektrischen Potentialdifferenzen $X12_0$, $X12_P$ der beiden ersten zeitlichen Reihenfolgen $\Sigma12_0$, $\Sigma12_P$ oder zwischen Potentialdifferenzen $X14_0$, $X14_P$ der beiden zweiten zeitlichen Reihenfolgen $\Sigma14_0$, $\Sigma14_P$ besteht eine zeitliche Verschiebung $\Delta$t. Die zeitliche Verschiebung $\Delta$t ist über die dargestellten Perioden konstant.

Der erste Algorithmus 22' ist dazu ausgebildet, die zeitliche Verschiebung $\Delta$t der beiden ersten zeitlichen Reihenfolgen $\Sigma12_0$, $\Sigma12_P$ zu erfassen. Der zweite Algorithmus 24' ist dazu ausgebildet, die zeitliche Verschiebung $\Delta$t der beiden zweiten zeitlichen Reihenfolgen $\Sigma14_0$, $Z14_P$ zu erfassen.

Mit der Zeitverschiebung $\Delta$t der beiden ersten zeitlichen Reihenfolgen $\Sigma12_0$, $\Sigma12_P$ berechnet der erste Algorithmus 22' die erste Geschwindigkeitskomponente V12:

$$V12 = (G12/4) / (\Delta t * M),$$

wobei G12 die erste Gitterkonstante des ersten Fotoempfängers 12, $\Delta t$ die zeitliche Verschiebung der beiden ersten zeitlichen Reihenfolgen $\Sigma 12_0$, $\Sigma 12_P$ des ersten Fotoempfängers 12 und M ein Abbildungsmassstab ist.

Mit der Zeitverschiebung $\Delta t$ der beiden zweiten zeitlichen Reihenfolgen $\Sigma 14_0$, $\Sigma 14_P$ berechnet der zweite Algorithmus 24' die zweite Geschwindigkeitskomponente V14:

$$V14 = (G14/4) / (\Delta t * M),$$

wobei G14 die zweite Gitterkonstante des zweiten Fotoempfängers 14, $\Delta t$ die zeitliche Verschiebung der beiden zweiten zeitlichen Reihenfolgen $\Sigma 14_0$, $\Sigma 14_P$ des zweiten Fotoempfängers 14 und M ein Abbildungsmassstab ist.

Der dritte Algorithmus 26' ist dazu ausgebildet, aus der ersten und zweiten Geschwindigkeitskomponente V12, V14 die Fahrzeuggeschwindigkeit V zu berechnen. Der Betrag der Fahrzeuggeschwindigkeit V lautet:

$$|V| = \sqrt{V12^2 + V14^2} * \cos\beta$$

Der dritte Algorithmus 26' ist auch dazu ausgebildet, aus den beiden ersten zeitlichen Reihenfolgen $\Sigma 12_0$, $\Sigma 12_P$ oder aus den beiden zweiten zeitlichen Reihenfolgen $\Sigma 14_0$, $\Sigma 14_P$ die Fahrtrichtung R des Fahrzeugs 1 zu ermitteln. Dazu ermittelt der dritte Algorithmus 26', ob die erste zeitliche Reihenfolge $\Sigma 12_0$ der Nullphase 0 der ersten zeitlichen Reihenfolge $\Sigma 12_P$ der weiteren Phase P vorauseilt, oder ob die zweite zeitliche Reihenfolge $\Sigma 14_0$ der Nullphase 0 der zweiten zeitlichen Reihenfolge $\Sigma 14_P$ der weiteren Phase P vorauseilt, was der Fahrtrichtung R des Fahrzeugs 1 nach rückwärts entspricht. Entsprechend ermittelt der dritte Algorithmus 26' ob die erste zeitliche Reihenfolge $\Sigma 12_0$ der Nullphase 0 der zweiten zeitlichen Reihenfolge $\Sigma 12_P$ der weiteren Phase P nacheilt, oder ob die zweite zeitliche Reihenfolge $\Sigma 14_0$ der Nullphase 0 der zweiten zeitlichen Reihenfolge $\Sigma 14_P$ der weiteren Phase P nacheilt, was der Fahrtrichtung R des Fahrzeugs 1 nach vorwärts entspricht. Gemäss Fig. 4 und 5 ist das Fahrzeug 1 in Vorwärtsfahrt.

Und der dritte Algorithmus 26' ist auch dazu ausgebildet, aus dem Fotoempfängerwinkel $\alpha$ und dem Tangens der ersten und zweiten Geschwindigkeitskomponente V12, V14 den Schwimmwinkel $\beta$ des Fahrzeugs 1 zu berechnen. Der Schwimmwinkel $\beta$ lautet:

$$\beta = \alpha - \tan^{-1}\left(\frac{V12}{V14}\right)$$

Die beiden ersten zeitlichen Reihenfolgen $\Sigma 12_0$, $\Sigma 12_P$ oder die beiden zweiten zeitlichen Reihenfolgen $\Sigma 14_0$, $\Sigma 14_P$, so wie in Fig. 4 und 5 dargestellt, unterscheiden sich durch unterschiedlich lange Zeitfenster T1, T2. Die Zeitfenster T1, T2 umfassen ein erstes Zeitfenster T1 und ein zweites Zeitfenster T2. In der Darstellung gemäss Figur 4 ist das erste Zeitfenster T1 0.002sec lang, in der Darstellung gemäss Fig. 5 ist das zweite Zeitfenster T2 0.004sec lang, also doppelt so lang wie das erste Zeitfenster T1. Im doppelt so langen zweiten Zeitfenster T2 sind doppelt so viele Perioden der beiden ersten zeitlichen Reihenfolgen $\Sigma 12_0$, $\Sigma 12_P$ oder der beiden zweiten zeitlichen Reihenfolgen $\Sigma 14_0$, Z14_P dargestellt, als im ersten Zeitfenster T1.

Der dritte Algorithmus 26' ist dazu ausgebildet, die zeitliche Verschiebung $\Delta t$ zwischen den beiden ersten zeitlichen Reihenfolgen $\Sigma 12_0$, $\Sigma 12_P$ oder der beiden zweiten zeitlichen Reihenfolgen $\Sigma 14_0$, $\Sigma 14_P$ durch eine Zeitkorrelation zu ermitteln. Dazu verrückt der dritte Algorithmus 26' die beiden ersten zeitlichen Reihenfolgen $\Sigma 12_0$, $\Sigma 12_P$ oder die beiden zweiten zeitlichen Reihenfolgen $\Sigma 14_0$, $\Sigma 14_P$ in der Zeit t so lange gegenseitig um einen Verrückungswert $\tau$, bis für alle Perioden der beiden ersten zeitlichen Reihenfolgen $\Sigma 12_0$, $\Sigma 12_P$ oder der beiden zweiten zeitlichen Reihenfolgen $\Sigma 14_0$, $\Sigma 14_P$ die zeitliche Verschiebung $\Delta t$ weitgehend gleich Null ist. Der dritte Algorithmus 26' bestimmt den Verrückungswert $\tau$. Der Verrückungswert $\tau$ entspricht dann der zu ermittelnden zeitlichen Verschiebung $\Delta t$. Im Sinne der Erfindung hat der Ausdruck "weitgehend gleich" die Bedeutung von "mit einer Abweichung von kleiner/gleich 10%".

Es existieren verschiedene Techniken der Zeitkorrelation wie die Kreuzkorrelation, die schnelle FourierTransformation, usw. Je grösser die Anzahl der Perioden der beiden ersten zeitlichen Reihenfolgen $\Sigma 12_0$, $\Sigma 12_P$ oder der beiden zweiten zeitlichen Reihenfolgen $\Sigma 14_0$, $\Sigma 14_P$ ist, desto besser ist die Güte der Zeitkorrelation. Daher ist der dritte Algorithmus 26' dazu ausgebildet, die Ermittlung der zeitlichen Verschiebung $\Delta t$ mehrmals mit unterschiedlich langen Zeitfenstern T1, T2 durchzuführen. Die Zeitkorrelation mit der besten Güte, d.h. der geringsten Abweichung zwischen den bestimmten Verrückungswerten $\tau$ der Perioden bzw. mit dem längsten Zeitfenster T1, T2 wird dann von den ersten und zweiten Algorithmen 22', 24' für die Berechnung der die Geschwindigkeitskomponente V12, V14 verwendet.

Die vorliegende Erfindung ist durch die unabhängigen Ansprüche definiert, und vorteilhafte Ausführungsformen werden in den abhängigen Ansprüchen beschrieben.

**Bezugszeichen**

| | |
|---|---|
| 1 | Fahrzeug |
| 10 | Sensoreinrichtung |
| 11 | optisches System |
| 12 | erster Fotoempfänger |
| 12i, i=1...n | erste Fotodiode |
| 14 | zweiter Fotoempfänger |
| 14i, i=1...n | zweite Fotodiode |

| 15 | Symmetriegerade |
|---|---|
| 20 | Auswerteeinrichtung |
| 22 | erste Auswerteeinheit |
| 22' | erster Algorithmus |
| 24 | zweite Auswerteeinheit |
| 24' | zweiter Algorithmus |
| 26 | dritte Auswerteeinheit |
| 26' | dritter Algorithmus |
| $\alpha$ | Fotoempfängerwinkel |
| $\beta$ | Schwimmwinkel |
| FB | Fahrbahn |
| G12 | erste Gitterkonstante |
| G14 | zweite Gitterkonstante |
| i | Index |
| M | Abbildungsmassstab |
| n | Mehrzahl der Fotodioden |
| 0 | Nullphase |
| P | weitere Phase |
| $\Delta P$ | Phasenversatz |
| R | Fahrtrichtung |
| S | Signalstärke |
| S12 | erste Messsignale |
| $S12^+_0$, $S12^+_P$ | erste positive Messsignale |
| $S12^-_0$, $S12^-_P$ | erste negative Messsignale |
| S14 | zweite Messsignale |
| $S14^+_0$, $S14^+_P$ | zweite positive Messsignale |
| $S14^-_0$, $S14^-_P$ | zweite negative Messsignale |
| $\Sigma12_0$, $Z14_P$ | erste zeitliche Reihenfolge |
| $\Sigma12_0$, $Z14_P$ | zweite zeitliche Reihenfolge |
| t | Zeit |
| T1 | erstes Zeitfenster |
| T2 | zweites Zeitfenster |
| $\Delta t$ | zeitliche Verschiebung |
| $\tau$ | Verschiebungswert |
| V | Fahrzeuggeschwindigkeit |
| Vp | parallele Geschwindigkeitskomponente |
| Vr | resultierende Geschwindigkeitskomponente |
| Vs | senkrechte Geschwindigkeitskomponente |
| V12 | erste Geschwindigkeitskomponente |
| V14 | zweite Geschwindigkeitskomponente |
| X12 | erste Potentialdifferenzen |
| $X12_0$ | erste Potentialdifferenzen der Nullphase 0 |
| $X12_P$ | erste Potentialdifferenzen der weiteren Phase P |
| X14 | zweite Potentialdifferenzen |
| $X14_0$ | zweite Potentialdifferenzen der Nullphase 0 |
| $X14_P$ | zweite Potentialdifferenzen der weiteren Phase P |

## Patentansprüche

1. Sensoreinrichtung (10) zur Erfassung einer Relativbewegung zwischen einem Fahrzeug (1) und einer Fahrbahn (FB); mit einem optischen System (11), welches am Fahrzeug (1) angebracht ist, welches optische System (11) wenigstens zwei, in einem Winkel zueinander und

in einem von 0° verschiedenen Fotoempfängerwinkel ($\alpha$) zu einer Symmetriegeraden (15) angeordnete Fotoempfänger (12, 14) aufweist, welche Symmetriegerade (15) sich optisch parallel zu einer Fahrzeuglängsachse erstreckt, auf welche Fotoempfänger (12, 14) ein Teil der Fahrbahn (FB) abbildbar ist und mit denen der abgebildete Teil der Fahrbahn (FB) erfassbar ist, welche Fotoempfänger (12, 14) für den erfassten Teil der Fahrbahn (FB) Messsignale (S12, S14) erzeugen; und mit einer wenigstens einen Algorithmus (22', 24', 26') aufweisenden Auswerteeinrichtung (20) zur Bestimmung zumindest einer Fahrzeuggeschwindigkeit (V); **dadurch gekennzeichnet, dass** der Algorithmus (22', 24', 26') dazu ausgebildet ist, aus den Messignalen (S12) von einem ersten Fotoempfänger (12) der beiden Fotoempfänger (12, 14) zwei erste zeitliche Reihenfolgen ($\Sigma12_0$, $\Sigma12_P$) zu bilden; dass der Algorithmus (22', 24', 26') dazu ausgebildet ist, aus den Messignalen (S14) von einem zweiten Fotoempfänger (14) der beiden Fotoempfänger (12, 14) zwei zweite zeitliche Reihenfolgen ($\Sigma14_0$, $\Sigma14_P$) zu bilden; **dass** der Algorithmus (22', 24', 26') dazu ausgebildet, ist die Fahrzeuggeschwindigkeit (V) anhand einer zeitlichen Verschiebung ($\Delta t$) der beiden ersten zeitlichen Reihenfolgen ($\Sigma12_0$, $\Sigma12_P$) zueinander und anhand einer zeitlichen Verschiebung ($\Delta t$) der beiden zweiten zeitlichen Reihenfolgen ($\Sigma14_0$, $\Sigma14_P$) zueinander zu bestimmen.

2. Sensoreinrichtung nach Anspruch 1, **dadurch gekennzeichnet, dass** die Messsignale (S12, S14) erste Messsignale (S12) und zweite Messsignale (S14) umfassen; dass die ersten Messsignale (S12) erste Messsignale ($S12^+_0$, $S12^-_0$) einer Nullphase (0) und erste Messsignale ($S12^+_P$, $S12^-_P$) einer weiteren Phase (P) umfassen, welche um einen Phasenversatz ($\Delta P$) zueinander phasenversetzt sind; dass die zweiten Messsignale (S14) zweite Messsignale ($S14^+_0$, $S14^-_0$) einer Nullphase (0) und zweite Messsignale ($S14^+_P$, $S14^-_P$) einer weiteren Phase (P) umfassen, welche um einen Phasenversatz ($\Delta P$) zueinander phasenversetzt sind.

3. Sensoreinrichtung nach Anspruch 2, **dadurch gekennzeichnet, dass** der Algorithmus (22', 24', 26') einen ersten Algorithmus (22') und einen zweiten Algorithmus (24') umfasst; dass der erste Algorithmus (22') dazu ausgebildet ist, für die Nullphase (0) eine erste zeitliche Reihenfolge ($\Sigma12_0$) mit ersten

Potentialdifferenzen ($X12_0$) zwischen ersten Mess-signalen ($S12^+_0$, $S12^-_0$) zu bilden; und dass der erste Algorithmus (22') dazu ausgebildet ist, für die weitere Phase (P) eine erste zeitliche Reihenfolge ($\Sigma12_P$) mit ersten Potentialdifferenzen ($X12_P$) zwischen ersten Messsignalen ($S12^+_P$, $S12^-_P$) zu bilden.

4. Sensoreinrichtung nach Anspruch 2, **dadurch gekennzeichnet, dass** der zweite Algorithmus (24') dazu ausgebildet ist, für die Nullphase (0) eine zweite zeitliche Reihenfolge ($\Sigma14_0$) mit zweiten Potentialdifferenzen ($X14_P$) zwischen zweiten Messsignalen ($S14^+_0$, $S14^-_0$) zu bilden; und dass der zweite Algorithmus (24') dazu ausgebildet ist, für die weitere Phase (P) eine zweite zeitliche Reihenfolge ($Z14_P$) mit zweiten Potentialdifferenzen ($X14_P$) zwischen zweiten Messsignalen ($S14^+_P$, $S14^-_P$) zu bilden.

5. Sensoreinrichtung nach einem der Ansprüche 3 oder 4, **dadurch gekennzeichnet, dass** zwischen Potentialdifferenzen ($X12_0$, $X14_0$) der zeitlichen Reihenfolge ($\Sigma12_0$, $\Sigma14_0$) der Nullphase (0) und Potentialdifferenzen ($X12_P$, $X14_P$) der zeitlichen Reihenfolge ($\Sigma14_P$, $\Sigma14_P$) der weiteren Phase (P) die zeitliche Verschiebung ($\Delta t$) besteht; dass der erste Algorithmus (22') dazu ausgebildet ist, die zeitliche Verschiebung ($\Delta t$) zu erfassen und mit der erfassten zeitlichen Verschiebung ($\Delta t$) eine erste Geschwindigkeitskomponente

$$\mathtt{V12 \; = \; (G12/4) \; / \; (\Delta t \; * \; M)}$$

zu berechnen, wobei G12 eine erste Gitterkonstante des ersten Fotoempfängers (12) und M ein Abbildungsmassstab ist; und dass der der zweite Algorithmus (24') dazu ausgebildet ist, die zeitliche Verschiebung ($\Delta t$) zu erfassen und mit der erfassten zeitlichen Verschiebung ($\Delta t$) eine zweite Geschwindigkeitskomponente

$$\mathtt{V14 \; = \; (G14/4) \; / \; (\Delta t \; * \; M)}$$

zu berechnen, wobei G14 eine zweite Gitterkonstante des zweiten Fotoempfängers (14) und M ein Abbildungsmassstab ist.

6. Sensoreinrichtung nach Anspruch 5, **dadurch gekennzeichnet, dass** der Algorithmus (22', 24', 26') einen dritten Algorithmus (26') umfasst; dass der dritte Algorithmus (26') dazu ausgebildet ist, aus der ersten und zweiten Geschwindigkeitskomponente (V12, V14) eine resultierende Geschwindigkeit (Vr) zu berechnen, deren Betrag

$$\mathtt{|Vr| \; = \;} \sqrt{V12^2 + V14^2}$$

lautet.

7. Sensoreinrichtung nach Anspruch 6, **dadurch gekennzeichnet, dass** zwischen den beiden Fotoempfängern (12, 14) eine Symmetrieebene (15) verläuft, welche sich optisch parallel zu einer Fahrzeuglängsachse erstreckt; und dass der dritte Algorithmus (26') dazu ausgebildet ist, aus der Projektion der resultierenden Geschwindigkeit (Vr) auf die Symmetriegerade (15) die Fahrzeuggeschwindigkeit (V) zu berechnen, deren Betrag

$$\mathtt{|V| \; = \;} \sqrt{V12^2 + V14^2} \; * \; \mathtt{cos\ss}$$

lautet, wobei ($\beta$) der Schwimmwinkel ist.

8. Sensoreinrichtung nach einem der Ansprüche 6 oder 7, **dadurch gekennzeichnet, dass** der dritte Algorithmus (26') dazu ausgebildet ist, aus den beiden zeitlichen Reihenfolgen ($\Sigma12_0$, $\Sigma12_P$ oder $\Sigma14_0$, $\Sigma14_P$) eine Fahrtrichtung (R) des Fahrzeugs (1) zu ermitteln, indem der dritte Algorithmus (26') ermittelt, ob die erste zeitliche Reihenfolge ($\Sigma12_0$) der Nullphase (0) der ersten zeitlichen Reihenfolge ($\Sigma12_P$) der weiteren Phase (P) vorauseilt, oder ob die zweite zeitliche Reihenfolge ($\Sigma14_0$) der Nullphase 0 der zweiten zeitlichen Reihenfolge ($Z14_P$) der weiteren Phase (P) vorauseilt, was der Fahrtrichtung R des Fahrzeugs 1 nach rückwärts entspricht.; oder ob die erste zeitliche Reihenfolge ($\Sigma12_0$) der Nullphase (0) der zweiten zeitlichen Reihenfolge ($\Sigma12_P$) der weiteren Phase (P) nacheilt, oder ob die zweite zeitliche Reihenfolge ($\Sigma14_0$) der Nullphase (0) der zweiten zeitlichen Reihenfolge ($Z14_P$) der weiteren Phase (P) nacheilt, was einer Fahrtrichtung (R) des Fahrzeugs (1) nach vorwärts entspricht.

9. Sensoreinrichtung nach einem der Ansprüche 5 bis 8, **dadurch gekennzeichnet, dass** der dritte Algorithmus (22', 24', 26') einen dritten Algorithmus (26') umfasst; dass der dritte Algorithmus (26') dazu ausgebildet ist, einen Schwimmwinkel

$$\mathtt{\ss \; = \; \alpha \; - \; tan^{-1}} \left( \frac{V12}{V14} \right)$$

zu berechnen, welcher vom Fotoempfängerwinkel ($\alpha$) und dem Tangens der ersten und zweiten Geschwindigkeitskomponente (V12, V14) abhängt.

10. Sensoreinrichtung nach einem der Ansprüche 5 bis 9, **dadurch gekennzeichnet, dass** der dritte Algorithmus (26') dazu ausgebildet ist, die zeitliche Verschiebung ($\Delta t$) zwischen den beiden zeitlichen Rei-

henfolgen ($\Sigma 12_0$, $\Sigma 12_P$, $\Sigma 14_0$, $\Sigma 14_P$) durch eine Zeit-korrelation zu ermitteln.

**11.** Sensoreinrichtung nach Anspruch 10, **dadurch gekennzeichnet, dass** die beiden ersten zeitlichen Reihenfolgen ($\Sigma 12_0$, $\Sigma 12_P$) oder die beiden zweiten zeitlichen Reihenfolgen ($\Sigma 14_0$, $\Sigma 14_P$) mehrere Perioden aufweisen; und dass der dritte Algorithmus (26') dazu ausgebildet ist, zur Ermittlung der Zeitkorrelation die beiden ersten zeitlichen Reihenfolgen ($\Sigma 12_0$, $\Sigma 12_P$) oder die beiden zweiten zeitlichen Reihenfolgen ($\Sigma 14_0$, $\Sigma 14_P$) in der Zeit (t) so lange um einen Verrückungswert ($\tau$) gegenseitig zu verrücken, bis für alle Perioden der beiden ersten zeitlichen Reihenfolgen ($\Sigma 12_0$, $\Sigma 12_P$) oder der beiden zweiten zeitlichen Reihenfolgen ($\Sigma 14_0$, $\Sigma 14_P$) die zeitliche Verschiebung ($\Delta t$) weitgehend gleich Null ist; und dass der dritte Algorithmus (26') den Verrückungswert ($\tau$) bestimmt.

**12.** Sensoreinrichtung nach Anspruch 11, **dadurch gekennzeichnet, dass** der dritte Algorithmus (26') dazu ausgebildet ist, die Zeitkorrelation in unterschiedlich langen Zeitfenstern (T1, T2) zu ermitteln; und dass der erste und zweite Algorithmus (22', 24') für die Berechnung der ersten und zweiten Geschwindigkeitskomponente (V12, V14) das längste Zeitfenster (T1, T2) verwenden.

**13.** Verfahren zur Erfassung einer Relativbewegung zwischen einem Fahrzeug (1) und einer Fahrbahn (FB); mittels einer Sensoreinrichtung (10), welche nach einem der Ansprüche 1 bis 12 ausgebildet ist, **dadurch gekennzeichnet, dass** aus den Messignalen (S12) von einem ersten Fotoempfänger (12) der beiden Fotoempfänger (12, 14) zwei erste zeitliche Reihenfolgen ($\Sigma 12_0$, $\Sigma 12_P$) gebildet werden; dass aus den Messignalen (S14) von einem zweiten Fotoempfänger (14) der beiden Fotoempfänger (12, 14) zwei zweite zeitliche Reihenfolge ($\Sigma 14_0$, $\Sigma 14_P$) gebildet werden und die Fahrzeuggeschwindigkeit (V) anhand einer zeitlichen Verschiebung ($\Delta t$) der beiden ersten zeitlichen Reihenfolgen ($\Sigma 12_0$, $\Sigma 12_P$) zueinander und der zeitlichen Verschiebung der beiden zweiten zeitlichen Reihenfolgen ($\Sigma 14_0$, $\Sigma 14_P$) zueinander bestimmt wird.

**14.** Computerprogrammprodukt, insbesondere Computerprogramm oder Datenträger als Bestandteil einer Sensoreinrichtung (10) die nach einem der Ansprüche 1 bis 12 ausgebildet ist, die Schritte nach einem Verfahren nach Anspruch 13 durchzuführen.

**Claims**

**1.** A sensor device (10) for detecting a relative motion between a vehicle (1) and a roadway (FB); which comprises an optical system (11) that is attached to the vehicle (1), which optical system (11) comprises at least two photoreceivers (12, 14) arranged at an angle to each other and at a photoreceiver angle ($\alpha$) with respect to a line of symmetry (15), which line of symmetry (15) is optically aligned with a longitudinal axis of the vehicle (1), onto which photoreceivers (12, 14) a portion of the roadway (FB) can be imaged and by which the imaged portion of the roadway (FB) can be detected, which photoreceivers (12, 14) generate measurement signals (S12, S14) for the portion of the roadway (FB) detected; and with an evaluation device (20) which comprising at least one algorithm (22', 24', 26') for determining at least one vehicle velocity (V); **characterized in that** the algorithm (22', 24', 26') is configured to generate two first chronological sequences ($\Sigma 12_0$, $\Sigma 12_P$) from the measurement signals (S12) from a first photoreceiver (12) of the two photoreceivers (12, 14); **in that** the algorithm (22', 24', 26') is configured to generate two second chronological sequences ($\Sigma 14_0$, $\Sigma 14_P$) from the measurement signals (S14) from a second photoreceiver (14) of the two photoreceivers (12, 14); **in that** the algorithm (22', 24', 26') is configured to determine the vehicle velocity (V) by using a time offset ($\Delta t$) between the two first chronological sequences ($\Sigma 12_0$, $\Sigma 12_P$); and **in that** the algorithm (22', 24', 26') is configured to determine the vehicle velocity (V) by using a time offset ($\Delta t$) between the two second chronological sequences ($\Sigma 14_0$, $\Sigma 14_P$).

**2.** The sensor device according to claim 1, **characterized in that** the measurement signals (S12, S14) comprise first measurement signals (S12) and second measurement signals (S14); **in that** the first measurement signals (S12) comprise first measurement signals ($S12^+_0$, $S12^-_0$) of a zero phase (0) and first measurement signals ($S12^+_P$, $S12^-_P$) of a further phase (P) that are phase offset with respect to each other by a phase offset ($\Delta P$); **in that** the second measurement signals (S14) comprise second measurement signals ($S14^+_0$, $S14^-_0$) of a zero phase (0) and second measurement signals ($S14^+_P$, $S14^-_P$) of a further phase (P) which are phase offset with respect to each other by a phase offset ($\Delta P$).

**3.** The sensor device according to claim 2, **characterized in that** the algorithm (22', 24', 26') comprises a first algorithm (22') and a second algorithm (24'); **in that** the first algorithm (22') is configured to generate a first chronological sequence ($\Sigma 12_0$) for the zero phase (0) having first differences in potential ($X12_0$) between first measurement signals ($S12^+_0$, $S12^-_0$); and **in that** the first algorithm (22') is configured to generate a first chronological sequence ($S12^+_0$, $S12^-_0$) for the further phase (P) having first differences in potential ($X12_P$) between first measurement signals (S12$^+_P$, S12$^-_P$).

4. The sensor device according to claim 2, **characterized in that** the second algorithm (24') is configured to generate a second chronological sequence ($\Sigma14_0$) for the zero phase (0) having second differences in potential (X14$_P$) between second measurement signals (S14$^+_0$, S14$^-_0$); and **in that** the second algorithm (24') is configured to generate a second chronological sequence ($\Sigma14_P$) for the further phase (P) having second differences in potential (X14$_P$) between second measurement signals (S14$^+_P$, S14$^-_P$).

5. The sensor device according to any of the claims 3 or 4, **characterized in that** the time offset ($\Delta t$) exists between differences in potential (X12$_0$, X14$_0$) of the chronological sequence ($\Sigma12_0$, $\Sigma14_0$) of the zero phase (0) and differences in potential (X12$_P$, X14$_P$) of the chronological sequence ($\Sigma14_P$, $\Sigma14_P$) of the further phase (P); **in that** the first algorithm (22') is configured to detect the time offset ($\Delta t$) and to use the time offset ($\Delta t$) detected to calculate a first velocity component

$$\text{V12} = \text{(G12/4)} / (\Delta t * M)$$

wherein G12 is a first lattice constant of the first photoreceiver (12) and M is an imaging scale; and **in that** the second algorithm (24') is configured to detect the time offset ($\Delta t$) and to use the time offset ($\Delta t$) detected to calculate a second velocity component

$$\text{V14} = \text{(G14/4)} / (\Delta t * M)$$

wherein G14 is a second lattice constant of the second photoreceiver (14) and M is an imaging scale.

6. The sensor device according to claim 5, **characterized in that** the algorithm (22', 24', 26') comprises a third algorithm (26'); **in that** the third algorithm (26') is configured to use the first and second velocity components (V12, V14) to calculate a resulting velocity (Vr) having the absolute value

$$|\text{Vr}| = \sqrt{V12^2 + V14^2}.$$

7. The sensor device according to claim 6, **characterized in that** a plane of symmetry (15) extends between the two photoreceivers (12, 14) which, optically, is parallel to a longitudinal axis of the vehicle; and **in that** the third algorithm (26') is configured to use the projection of the resulting velocity (Vr) onto the plane of symmetry (15) to calculate the vehicle velocity (V) having the absolute value

$$|\text{V}| = \sqrt{V12^2 + V14^2} * \cos\beta$$

wherein ($\beta$) is the side-slip angle.

8. The sensor device according to any of the claims 6 or 7, **characterized in that** the third algorithm (26') is configured to determine a direction of travel (R) of the vehicle (1) from the two chronological sequences ($\Sigma12_0$, $\Sigma12_P$ oder $\Sigma14_0$, $\Sigma14_P$) wherein said third algorithm (26') determines whether the first chronological sequence ($\Sigma12_0$) of the zero phase (0) precedes the first chronological sequence ($\Sigma12_P$) of the further phase (P), or whether the second chronological sequence ($\Sigma14_0$) of the zero phase 0 precedes the second chronological sequence ($\Sigma14_P$) of the further phase (P) which corresponds to a direction of travel R of the vehicle 1 reversing; or whether the first chronological sequence ($\Sigma12_0$) of the zero phase (0) lags behind the second chronological sequence ($\Sigma12_P$) of the further phase (P), or whether the second chronological sequence ($\Sigma14_0$) of the zero phase (0) lags behind the second chronological sequence ($\Sigma14_P$) of the further phase (P) which corresponds to a direction of travel (R) of the vehicle (1) moving forward.

9. The sensor device according to any of the claims 5 to 8, **characterized in that** the third algorithm (22', 24', 26') comprises a third algorithm (26'); **in that** the third algorithm (26') is configured to calculate a side-slip angle

$$\beta = \alpha - \tan^{-1}\left(\frac{V12}{V14}\right)$$

that is a function of the photoreceiver angle ($\alpha$) and the tangent of the first and second velocity components (V12, V14).

10. The sensor device according to any of the claims 5 to 9, **characterized in that** the third algorithm (26') is configured to determine the time offset ($\Delta t$) between the two chronological sequences ($\Sigma12_0$, $\Sigma12_P$, $\Sigma14_0$, $\Sigma14_P$) by using a time correlation.

11. The sensor device according to claim 10, **characterized in that** the two first chronological sequences ($\Sigma12_0$, $\Sigma12_P$) or the two second chronological sequences ($\Sigma14_0$, $\Sigma14_P$) comprise multiple periods; and **in that** for determining the time correlation the third algorithm (26') is configured to shift the two first chronological sequences ($\Sigma12_0$, $\Sigma12_P$) or the two second chronological sequences ($\Sigma14_0$, $\Sigma14_P$) with respect to each other in time (t) by a shift value ($\tau$) until for all periods of the two first chronological sequences ($\Sigma12_0$, $\Sigma12_P$) or the two second chronological sequences ($\Sigma14_0$, $\Sigma14_P$) the time offset ($\Delta t$)

is substantially equal to zero; and **in that** the third algorithm (26') determines said shift value ($\tau$).

12. The sensor device according to claim 11, **characterized in that** the third algorithm (26') is configured to determine the time correlation in time windows (T1, T2) of different lengths; and **in that** the first and second algorithms (22', 24') use the longest time window (T1, T2) for calculating the first and second velocity components (V12, V14).

13. A method for detecting a relative motion between a vehicle (1) and a roadway (FB) by means of a sensor device (10) according to any of the claims 1 to 12; **characterized in that** two first chronological sequences ($\Sigma12_0$, $\Sigma12_P$) are generated from the measurement signals (S12) from a first photoreceiver (12) of the two photoreceivers (12, 14), **in that** two second chronological sequences ($\Sigma14_0$, $\Sigma14_P$) are generated from the measurement signals (S14) from a second photoreceiver (14) of the two photoreceivers (12, 14) and the vehicle velocity (V) is determined by using a time offset ($\Delta t$) of the two first chronological sequences ($\Sigma12_0$, $\Sigma12_P$) with respect to each other and the time offset of the two second chronological sequence ($\Sigma14_0$, $\Sigma14_P$) with respect to each other.

14. A computer program product, particularly a computer program or a data carrier being a component of a sensor device (10) which is configured according to any of the claims 1 to 12 to perform the program steps according to a method as claimed in claim 13.

**Revendications**

1. Dispositif capteur (10) pour la détection d'un mouvement relatif entre un véhicule (1) et une chaussée (FB); comprenant un système optique (11) fixé au véhicule (1), lequel système optique (11) comprend au moins deux photorécepteurs (12, 14) qui sont disposés dans un angle l'un à l'autre et dans un angle photorécepteur ($\alpha$) différent de 0° par rapport à une droite de symétrie (15), laquelle droite de symétrie (15) s'étend parallèlement à un axe longitudinal du voiture (1), sur lesquels photorécepteurs (12, 14) une partie de la chaussée (FB) peut être imagée et par lesquels photorécepteurs (12, 14) la partie imagée de la chaussée (FB) peut être détectée, lesdits photorécepteurs (12, 14) génèrent des signaux de mesure (S12, S14) pour la partie détectée de la chaussée (FB); et comprenant un dispositif d'évaluation (20) comportant au moins un algorithme (22', 24', 26') pour la détermination d'au moins une vitesse de véhicule (V);
**caractérisé en ce que** l'algorithme (22', 24', 26') est configuré pour générer, à partir des signaux de mesure (S12) d'un premier photorécepteur (12) des deux photorécepteurs (12, 14), deux premières séquences chronologiques ($\Sigma12_0$, $\Sigma12_P$) ; en ce que l'algorithme (22', 24', 26') est configuré pour générer, à partir des signaux de mesure (S14) d'un second photorécepteur (14) des deux photorécepteurs (12, 14), deux secondes séquences chronologiques ($\Sigma14_0$, $\Sigma14_P$) ; en ce que l'algorithme (22', 24', 26') est configuré pour déterminer la vitesse du véhicule (V) à partir d'un décalage temporel ($\Delta t$) des deux premières séquences chronologiques ($\Sigma12_0$, $\Sigma12_P$) l'une par rapport à l'autre et à partir d'un décalage temporel ($\Delta t$) des deux secondes séquences chronologiques ($\Sigma14_0$, $\Sigma14_P$) l'une par rapport à l'autre.

2. Dispositif capteur selon la revendication 1, **caractérisé en ce que** lesdits signaux de mesure (S12, S14) comprennent des premiers signaux de mesure (S12) et des seconds signaux de mesure (S14) ; **en ce que** les premiers signaux de mesure (S12) comprennent des premiers signaux de mesure ($S12^+_0$, $S12^-_0$) d'une phase nulle (0) et des premiers signaux de mesure ($S12^+_P$, $S12^-_P$) d'une autre phase (P) qui sont déphasés les uns par rapport aux autres d'un décalage de phase ($\Delta P$) ; **en ce que** les seconds signaux de mesure (S14) comprennent des seconds signaux de mesure ($S14^+_0$, $S14^-_0$) d'une phase nulle (0) et des seconds signaux de mesure ($S14^+_P$, $S14^-_P$) d'une autre phase (P) qui sont déphasés les uns par rapport aux autres d'un décalage de phase ($\Delta P$).

3. Dispositif capteur selon la revendication 2, **caractérisé en ce que** l'algorithme (22', 24', 26') comprend un premier algorithme (22') et un second algorithme (24') ; **en ce que** le premier algorithme (22') est configuré pour générer une première séquence chronologique ($\Sigma12_0$) pour la phase nulle (0) présentant des premières différences de potentiel ($X12_0$) entre des premiers signaux de mesure ($S12^+_0$, $S12^-_0$) ; et **en ce que** le premier algorithme (22') est configuré pour générer une première séquence chronologique ($\Sigma12_P$) pour l'autre phase (P) présentant des premières différences de potentiel ($X12_P$) entre des premiers signaux de mesure ($S12^+_P$, $S12^-_P$).

4. Dispositif capteur selon la revendication 2, **caractérisé en ce que** le second algorithme (24') est configuré pour générer une seconde séquence chronologique ($\Sigma14_0$) pour la phase nulle (0) présentant des secondes différences de potentiel ($X14_P$) entre des seconds signaux de mesure ($S14^+_0$, $S14^-_0$) ; et **en ce que** le second algorithme (24') est configuré pour générer une seconde séquence chronologique ($\Sigma14_P$) pour l'autre phase (P) présentant des secondes différences de potentiel ($X14_P$) entre des seconds signaux de mesure ($S14^+_P$, $S14^-_P$).

**5.** Dispositif capteur selon l'une quelconque des revendications 3 ou 4, **caractérisé en ce qu'**il y a un décalage temporel ($\Delta t$) entre les différences de potentiel ($X12_0$, $X14_0$) de la séquence chronologique ($\Sigma12_0$, $\Sigma14_0$) de la phase nulle (0) et les différences de potentiel ($X12_P$, $X14_P$) de la séquence chronologique ($\Sigma14_P$, $\Sigma14_P$) de l'autre phase (P) ; **en ce que** le premier algorithme (22') est configuré pour détecter ledit décalage temporel ($\Delta t$) et pour calculer à partir dudit décalage temporel ($\Delta t$) détecté une première composante de vitesse

$$V12 = (G12/4) / (\Delta t * M)$$

où G12 est une première constante de réseau du premier photorécepteur (12) et M est une échelle d'imagerie ; et **en ce que** le second algorithme (24') est configuré pour détecter ledit décalage temporel ($\Delta t$) et pour calculer à partir dudit décalage temporel ($\Delta t$) détecté une seconde composante de vitesse

$$V14 = (G14/4) / (\Delta t * M)$$

où G14 est une seconde constante de réseau du seconde photorécepteur (14) et M est une échelle d'imagerie.

**6.** Dispositif capteur selon la revendication 5, **caractérisé en ce que** l'algorithme (22', 24', 26') comprend un troisième algorithme (26') ; **en ce que** ledit troisième algorithme (26') est configuré pour calculer à partir des première et seconde composantes de vitesse (V12, V14) une vitesse résultante (Vr) ayant la valeur absolue

$$|Vr| = \sqrt{V12^2 + V14^2}.$$

**7.** Dispositif capteur selon la revendication 6, **caractérisé en ce que** entre les deux photorécepteurs (12, 14) s'étend un plan de symétrie (15) optiquement parallèle à un axe longitudinal du véhicule ; et **en ce que** le troisième algorithme (26') est configuré pour calculer, à partir de la projection de la vitesse résultante (Vr) sur ledit plan de symétrie (15), la vitesse du véhicule (V) ayant la valeur absolue

$$|V| = \sqrt{V12^2 + V14^2} * \cos\beta$$

où ($\beta$) est l'angle de glissement latéral.

**8.** Dispositif capteur selon l'une quelconque des revendications 6 ou 7, **caractérisé en ce que** ledit troisième algorithme (26') est configuré pour déterminer, à partir des deux séquences chronologiques ($\Sigma12_0$, $\Sigma12_P$ ou $\Sigma14_0$, $\Sigma14_P$), une direction de déplacement (R) du véhicule (1), dans lequel ledit troisième algorithme (26') détermine si la première séquence chronologique ($\Sigma12_0$) de la phase nulle (0) précède la première séquence chronologique ($\Sigma12_P$) de l'autre phase (P) ou si la seconde séquence chronologique ($\Sigma14_0$) de la phase nulle 0 précède la seconde séquence chronologique ($\Sigma14_P$) de l'autre phase (P), ce qui correspond à un sens de déplacement R du véhicule 1 vers l'arrière ; ou si la première séquence chronologique ($\Sigma12_0$) de la phase nulle (0) est en retard par rapport à la seconde séquence chronologique ($\Sigma12_P$) de l'autre phase (P) ou si la seconde séquence chronologique ($\Sigma14_0$) de la phase nulle (0) est en retard par rapport à la seconde séquence chronologique ($\Sigma14_P$) de l'autre phase (P), ce qui correspond à un sens de déplacement (R) du véhicule (1) vers l'avant.

**9.** Dispositif capteur selon l'une des revendications 5 à 8, **caractérisé en ce que** le troisième algorithme (22', 24', 26') comprend un troisième algorithme (26') ; **en ce que** ledit troisième algorithme (26') est configuré pour calculer un angle de glissement latéral

$$\beta = \alpha - \tan^{-1}\left(\frac{V12}{V14}\right)$$

étant fonction de l'angle du photorécepteur ($\alpha$) et de la tangente des première et seconde composantes de la vitesse (V12, V14).

**10.** Dispositif capteur selon l'une quelconque des revendications 5 à 9, **caractérisé en ce que** le troisième algorithme (26') est configuré pour déterminer le décalage temporel ($\Delta t$) entre les deux séquences chronologiques ($\Sigma12_0$, $\Sigma12_P$, $\Sigma14_0$, $\Sigma14_P$) par une corrélation temporelle.

**11.** Dispositif capteur selon la revendication 10, **caractérisé en ce que** les deux premières séquences chronologiques ($\Sigma12_0$, $\Sigma12_P$) ou les deux secondes séquences chronologiques ($\Sigma14_0$, $\Sigma14_P$) comprennent des périodes multiples ; et **en ce que**, pour déterminer la corrélation temporelle, le troisième algorithme (26') est configuré pour décaler les deux premières séquences chronologiques ($\Sigma12_0$, $\Sigma12_P$) ou les deux secondes séquences chronologiques ($\Sigma14_0$, $\Sigma14_P$) l'une par rapport à l'autre dans le temps (t) d'une valeur de décalage ($\tau$) jusqu'à ce que pour toutes les périodes des deux premières séquences chronologiques ($\Sigma12_0$, $\Sigma12_P$) ou des deux secondes séquences chronologiques ($\Sigma14_0$, $\Sigma14_P$) le décalage temporel ($\Delta t$) soit sensiblement égal à nulle ; et **en ce que** le troisième algorithme (26') détermine ladite valeur de décalage ($\tau$).

**12.** Dispositif capteur selon la revendication 11, **carac-**

**térisé en ce que** le troisième algorithme (26') est configuré pour déterminer la corrélation temporelle dans des fenêtres temporelles (T1, T2) de longueurs différentes; et **en ce que** les premier et second algorithmes (22', 24') utilisent la fenêtre temporelle (T1, T2) la plus longue pour calculer les première et seconde composantes de la vitesse (V12, V14).

13. Procédé pour la détection d'un mouvement relatif entre un véhicule (1) et une chaussée (FB) au moyen d'un dispositif capteur (10) tel que défini dans l'une quelconque des revendications 1 à 12, **caractérisé en ce que** à partir des signaux de mesure (S12) d'un premier photorécepteur (12) des deux photorécepteurs (12, 14) sont générées deux premières séquences chronologiques ($\Sigma 12_0$, $\Sigma 12_P$) ; en ce que à partir des signaux de mesure (S14) d'un second photorécepteur (14) des deux photorécepteurs (12, 14) sont générées deux secondes séquences chronologiques ($\Sigma 14_0$, $\Sigma 14_P$) ; et la vitesse du véhicule (V) est déterminée en utilisant un décalage temporel ($\Delta t$) des deux premières séquences chronologiques ($\Sigma 12_0$, $\Sigma 12_P$) l'une par rapport à l'autre et le décalage temporel ($\Delta t$) des deux secondes séquences chronologiques ($\Sigma 14_0$, $\Sigma 14_P$) l'une par rapport à l'autre.

14. Produit programme d'ordinateur, en particulier programme d'ordinateur ou support de stockage de données en tant que composant d'un dispositif capteur (10) configuré comme défini dans l'une quelconque des revendications 1 à 12 pour réaliser les étapes selon un procédé tel que revendiqué dans la revendication 13.

Fig. 1

Fig. 2

14i, i=15
14i, i=13
14i, i=11
14i, i=9
14i, i=7
14i, i=5
14i, i=3
14i, i=1

14

$S14_0^-$

$S14_P^-$

24

24'

14i, i=16
14i, i=14
14i, i=12
14i, i=10
14i, i=8
14i, i=6
14i, i=4
14i, i=2

$S14_P^+$

S14, ΔP

$S14_0^+$

10,11

26

26'

12i, i=15
12i, i=13
12i, i=11
12i, i=9
12i, i=7
12i, i=5
12i, i=3
12i, i=1

$S12_0^-$

$S12_P^-$

22

22'

12

12i, i=16
12i, i=14
12i, i=12
12i, i=10
12i, i=8
12i, i=6
12i, i=4
12i, i=2

$S12_P^+$

S12, ΔP

$S12_0^+$

20

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0101536 A1
- FR 2749086 A1
- US 6403950 B1
- US 2009303459 A1